# EUROPÄISCHE PATENTSCHRIFT

(11) **EP 2 209 577 B1**
(45) Veröffentlichungstag und Bekanntmachung des Hinweises auf die Patenterteilung: **22.02.2012**
(21) Anmeldenummer: 08801709.0
(22) Anmeldetag: 26.08.2008
(51) Int. Cl.: B23B 29/24, B23B 31/26

(54) **SPINDELKOPF FUR WERKZEUGMASCHINEN MIT WERKZEUG-SPANNEINRICHTUNG**
SPINDLE HEAD FOR MACHINE TOOLS WITH TOOL CLAMPING DEVICE
TÊTE DE BROCHE POUR MACHINES-OUTILS, DOTÉE D'UN DISPOSITIF DE SERRAGE D'OUTIL

(30) Priorität: 13.09.2007 DE 102007043777
(43) Veröffentlichungstag der Anmeldung: 28.07.2010
(73) Patentinhaber: Sauter Feinmechanik GmbH, 72555 Metzingen (DE)
(72) Erfinder: DIERINGER, Jochen, 72379 Hechingen-Stetten (DE); SAHM, Detlef Dieter, 73669 Lichtenwald (DE); QUASS, Peter, 72555 Metzingen (DE)
(74) Vertreter: Bartels, Martin Erich Arthur
(86) Internationale Anmeldenummer: PCT/EP2008/006978
(87) Internationale Veröffentlichungsnummer: WO 2009/036864

(56) Entgegenhaltungen:
- DE-A1- 4 320 019
- DE-A1- 10 241 860
- DE-A1-102005 049 614
- SU-A1- 1 024 172
- US-A- 5 193 954

## Beschreibung

Die Erfindung betrifft einen Spindelkopf für Werkzeugmaschinen, insbesondere für den Betrieb an einer Werkzeugstation eines Werkzeugrevolvers, mit einem antreibbaren Spindelkörper mit einer Werkzeugaufnahme für Werkzeuge mit Hohlschaft und einer Werkzeug-Spanneinrichtung mit Spannelementen, die durch in Richtung der Spindelachse erfolgende Verschiebebewegungen eines Steuergliedes zwischen Spann- und Lösestellungen überführbar sind, wobei die Verschiebebewegungen durch Drehen eines im Spindelkörper um eine zur Achse senkrechte Drehachse drehbaren Exzenters erzeugbar sind.

Exzenterspanner zum Spannen von Hohlschaft-Kegelwerkzeugen in Köpfen, die in Verbindung mit Werkzeugmaschinen als Werkzeugträger dienen, sind bekannt, siehe DE 102 41 860 A1 oder DE 10 2005 049 614 A1. Die bekannten Köpfe haben mehrere Nachteile, und zwar sowohl was ihre Bedienbarkeit als auch was ihre Einsatzmöglichkeiten anbelangt. So ist die Spanneinrichtung bei den beiden vorstehend genannten, bekannten Lösungen mit Spezialschlüsseln betätigbar, wobei bei der Lösung gemäß DE 10 2005 049 614 A1 zwei gesonderte Exzenter mit einem unhandlichen Spezialschlüssel synchron betätigt werden müssen. Des Weiteren sind bekannte Spanneinrichtungen für Spindelköpfe, die in einer Werkzeugstation eines betreffenden Werkzeugrevolvers anbringbar sind, wenig geeignet.

Im Hinblick auf den Stand der Technik liegt der Erfindung die Aufgabe zugrunde, einen Spindelkopf zur Verfügung zu stellen, der sich sowohl durch eine einfache Bedienbarkeit der Spanneinrichtung auszeichnet als auch für einen Betrieb an einer Werkzeugstation eines Werkzeugrevolvers besonders geeignet ist.

Erfindungsgemäß ist diese Aufgabe durch einen Spindelkopf gelöst, der die Merkmale des Patentanspruches 1 in seiner Gesamtheit aufweist.

Dadurch, dass gemäß dem kennzeichnenden Teil des Anspruches 1 zwischen dem Exzenter der Spanneinrichtung und dessen Steuerglied eine Getriebeverbindung in Form eines Hebelgetriebes vorgesehen ist, eröffnet sich die Möglichkeit, nach Wunsch eine räumliche Trennung zwischen dem Exzenter, d. h. der Betätigungsstelle, und dem Steuerglied der Spanneinrichtung vorzusehen. Dadurch, dass die getriebliche Verbindung zwischen dem Exzenter und einem auf das Steuerglied der Spanneinrichtung einwirkenden Schwenkhebel durch einen Betätigungsschieber gebildet ist, der im Spindelkörper axial bewegbar ist, lässt sich auf einfache Weise ein axialer Abstand zwischen Steuerglied und Exzenter realisieren, so dass der Exzenter ohne konstruktive Schwierigkeiten an einem solchen Bereich des Spindelkörpers gelagert sein kann, wo der Exzenter für die Betätigung optimal zugänglich ist.

Insbesondere kann in vorteilhafter Weise der Spindelkörper in einem an einer Werkzeugscheibe des betreffenden Werkzeugrevolvers festlegbaren Grundkörper drehbar gelagert sein, wobei sich der Exzenter am aus dem Grundkörper vorstehenden vorderen Ende des Spindelkörpers befindet und der Exzenter somit auch bei den an Werkzeugscheiben gegebenen räumlichen Bedingungen frei zugänglich ist.

Daher ist eine derartige Ausführungsform bestens für den Einsatz bei einem Werkzeugrevolver geeignet, wie er in dem Dokument DE 10 2005 033 890 A1 beschrieben ist, wobei der Grundkörper des Spindelkopfes mit einem Umfangsbereich der Werkzeugscheibe verschraubt ist und wobei, wie in diesem Dokument beschrieben, ein inneres Antriebsende des Spindelkörpers in Kupplungseingriff mit einem in der Werkzeugscheibe befindlichen Drehantrieb kommt, wenn die Werkzeugscheibe in eine Position gedreht wird, bei der das im Spindelkörper gespannte Werkzeug zum Bearbeitungseinsatz gelangt.

Der bei der Erfindung vorgesehene, lediglich eine Exzenter, der am vorderen Endbereich des Spindelkörpers frei zugänglich ist, kann ohne Benutzung eines Spezialwerkzeuges durch ein handelsübliches Werkzeug betätigt werden, beispielsweise durch einen einfachen Sechskantschlüssel, der in einen Innensechskant des Exzenters einsetzbar ist.

Als Spannelemente können Spannklauen in zur Spindelachse konzentrischer, ringförmiger Anordnung innerhalb der Werkzeugaufnahme vorgesehen und an einer Steuerkurve des Steuergliedes derart geführt sein, dass bei dessen Axialbewegung eine Schwenkbewegung der Spannklauen in die Spannstellung erfolgt.

Für diese Axialbewegung des Steuergliedes mittels der über den Betätigungsschieber bewirkten Schwenkbewegung des Schwenkhebels kann sich dieser durch einen im Steuerglied vorhandenen Durchbruch hindurch erstrecken, der sich in dem in der Art eines Rotationskörpers gestalteten, innerhalb der Werkzeugaufnahme axial verschiebbar geführten Steuerglied in einem gegenüber der Steuerkurve nach rückwärts versetzten Längenbereich befindet. Um für die Schwenkbewegungen des Schwenkhebels innerhalb des Durchbruches des Steuergliedes eine Gleitführung zu bilden, kann innerhalb des Durchbruchs eine ein Dreh- und Gleitlager bildende, vom Schwenkhebel durchgriffene Kalotte vorgesehen sein.

Des Weiteren kann die Anordnung so getroffen sein, dass die Steuerkurve für die Spannklauen an einem in der Werkzeugaufnahme nach vorn vorstehenden Endkörper des Steuergliedes gelegen und derart ausgebildet ist, dass eine vom Schwenkhebel bewirkte Rückziehbewegung des Steuergliedes nach hinten die anlaufenden Spannklauen in die Spannstellung bewegt.

Hierbei kann die Anordnung so getroffen sein, dass eine auf das hintere Ende des Steuergliedes einwirkende Druckfeder das Steuerglied in eine nach vorn vorgeschobene, der Lösestellung entsprechende Position vorspannt.

Nachstehend ist die Erfindung anhand eines in der Zeichnung dargestellten Ausführungsbeispieles im Einzelnen erläutert. Es zeigen:
- Fig. 1: einen stark schematisch vereinfachten, lediglich das Funktionsprinzip verdeutlichenden Längsschnitt eines in einem nicht gezeigten Grundkörper drehbar gelagerten Spindelkörpers für einen Spindelkopf gemäß der Erfindung;
- Fig. 2: einen der Fig. 1 entsprechenden Längsschnitt mit in der Lösestellung befindlicher Spanneinrichtung und
- Fig. 3: einen nähere Einzelheiten zeigenden Längsschnitt des Ausführungsbeispieles des Spindelkopfes.

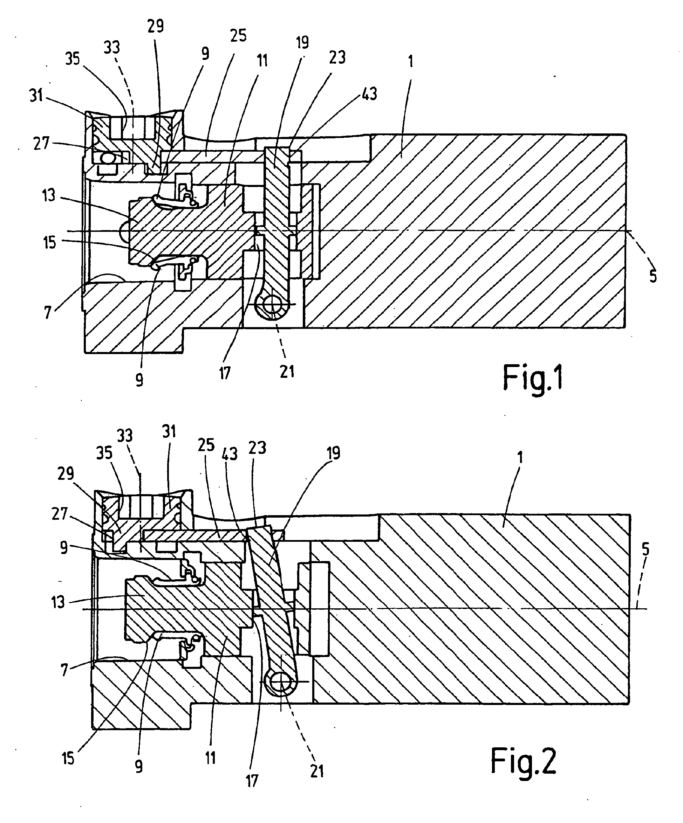

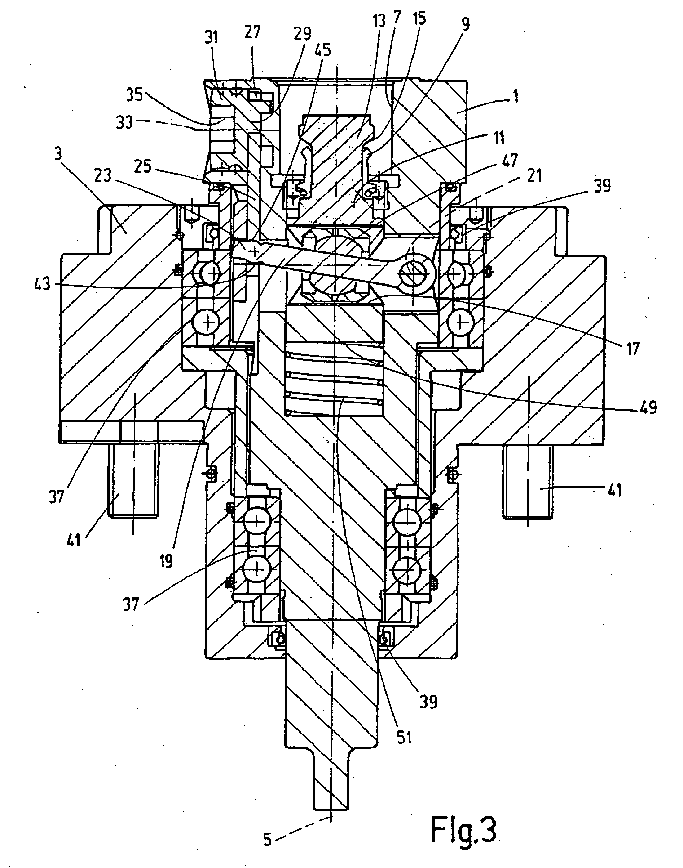

Fig. 1 und 2 zeigen vom Ausführungsbeispiel des erfindungsgemäßen Spindelkopfes lediglich in vereinfachter Darstellung den vorderen Abschnitt eines Spindelkörpers 1, der in einem nur in Fig. 3 gezeigten Grundkörper 3 um eine Spindelachse 5 drehbar gelagert ist. Am vorderen Ende des Spindelkörpers 1 befindet sich eine in üblicher Weise für Werkzeuge mit Hohlschaft ausgebildete Werkzeugaufnahme 7, in der betreffende Werkzeuge mittels einer Spanneinrichtung festspannbar sind. Diese weist in an sich bekannter Weise einen Kranz aus ringförmig angeordneten, die Achse 5 konzentrisch umgebenden Spannklauen 9 auf, die mittels der Bewegung eines in der Werkzeugaufnahme 7 axial verschiebbar geführten Steuergliedes 11 betätigbar sind, so dass sie zwischen der in Fig. 1 gezeigten Spannstellung und der in Fig. 2 gezeigten, radial nach innen geschwenkten Lösestellung bewegbar sind. Zu diesem Zweck weist das Steuerglied 11 eine Steuerkurve 15 auf, wobei die Lagebeziehungen so gewählt sind, dass beim Verschieben des Steuergliedes 11 nach hinten (in Fig. 1 und 2 nach rechts), die Spannklauen 9 in die Spannstellung geschwenkt werden, siehe Fig. 1.

Um die Axialbewegung des Steuergliedes 11 zu erzeugen, weist dieses in seinem gegenüber der Steuerkurve 15 nach innen versetzten Bereich einen Durchbruch 17 auf, durch den sich ein Schwenkhebel 19 hindurch erstreckt. Dieser ist mit einem Hebelende am Spindelkörper 1 außerhalb der Werkzeugaufnahme 7 um eine zur Spindelachse 5 senkrechte Schwenkachse 21 schwenkbar gelagert. Das hierzu entgegengesetzte Hebelende 23 ist mit einem flachen, lang gestreckten Betätigungsschieber 25 in gelenkigem Eingriff, der neben der Werkzeugaufnahme 7 in Axialrichtung verschiebbar geführt ist und dessen der Verbindungsstelle mit dem Schwenkhebel 19 entgegengesetztes, vorderes Ende einen Durchbruch 27 aufweist, der von einem Exzenter 29 durchgriffen ist. Dieser befindet sich an einem Exzenterkörper 31, der am vorderen Ende des Spindelkörpers 1 um eine Exzenterachse 33 drehbar ist, die zur Spindelachse 5 senkrecht verläuft. Für die Drehbetätigung weist der Exzenterkörper 31 einen Innensechskant 35 für die Betätigung mittels eines handelsüblichen Sechskantschlüssels auf. Wie der Vergleich der Fig. 1 und 2 zeigt, führt eine Drehbewegung des Exzenters 29 aus der in Fig. 1 gezeigten Drehstellung um 180° in die in Fig. 2 gezeigte Drehstellung zu einer Verschiebung des Betätigungsschiebers 25 und dadurch zu einer entsprechenden Schwenkbewegung des Schwenkhebels 19 entgegen dem Uhrzeigersinn, so dass das Steuerglied 11 nach vorn (in Fig. 1 und 2 nach links) bewegt wird, wodurch die Spannklauen 9 an der Steuerkurve 15 anlaufen und eine radial weiter innen liegende Lösestellung einnehmen können, die in Fig. 2 gezeigt ist.

Fig. 3 zeigt nähere Einzelheiten einer praktischen Ausführungsform des Spindelkopfes. Wie gezeigt, ist der Spindelkörper 1 im Grundkörper 3 mittels Wälzlagern 37 gelagert, wobei Wellenringdichtungen 39 neben den Wälzlagern 37 angeordnet sind. Der Grundkörper 3 ist mittels Halteschrauben 41 mit einer betreffenden Werkzeugmaschine verbindbar, beispielsweise der Werkzeugscheibe eines Werkzeugrevolvers, wie er in DE 10 2005 033 890 A1 gezeigt ist.

Wie Fig. 3 entnehmbar ist, weist der Schwenkhebel 19 an seinem Ende 23, das einen Durchbruch 43 im Betätigungsschieber 25 durchgreift, ballige Höcker 45 auf, die eine Art Drehgelenkstelle bilden. In entsprechender Weise erstreckt sich der Zentralbereich des Schwenkhebels 19 innerhalb des Durchbruches 17 des Steuergliedes 11 durch eine Kalottenführung 47 hindurch, durch die eine Dreh-Gleitführung gebildet ist. Das Steuerglied 11 weist die Steuerkurve 15 für die Spannklauen 9 auf. Eine zwischen dem hinteren Ende 49 und dem Spindelkörper 1 eingespannte Druckfeder 51 spannt das Steuerglied 11 nach vorn in die der Lösestellung entsprechende Position vor. Wie ersichtlich, befindet sich der Exzenter 29 gegenüber dem Steuerglied 11 entsprechend der Längenabmessung des Bestätigungsschiebers 25 in einer nach vorn versetzten Stellung, so dass der Exzenter 29 vor dem vorderen Ende des Grundkörpers 3 frei zugänglich und mittels eines in den Innensechskant 35 einsetzbaren Sechskantschlüssels drehbar ist. Für die durch Verdrehen des Exzenters 29 bewirkte Verschiebung des Betätigungsschiebers 25 und damit der Schwenkbewegung des Schwenkhebels 19 steht die volle Exzentrizität (180 Winkelgrad) des Exzenters 29 zur Verfügung. Dabei ist die Geometrie und Dimensionierung von Exzenter 29, Betätigungsschieber 25 und Schwenkhebel 19 so gestaltet, dass in der Spannstellung die Drehlage des Exzenters 29 knapp über einem Totpunkt liegt, wobei diese Drehstellung des Exzenters 29 durch einen Drehanschlag begrenzt ist, wodurch sich bei der Spannstellung ein selbstsichernder Zustand ergibt.

## Patentansprüche

1. Spindelkopf für Werkzeugmaschinen, insbesondere für den Betrieb an einer Werkzeugstation eines Werkzeugrevolvers, mit einem antreibbaren Spindelkörper (1) mit einer Werkzeugaufnahme (7) für Werkzeuge mit Hohlschaft und einer Werkzeug-Spanneinrichtung mit Spannelementen (9), die durch in Richtung der Spindelachse (5) erfolgende Verschiebebewegungen eines Steuergliedes (11) zwischen Spann- und Lösestellungen überführbar sind, wobei die Verschiebebewegungen durch Drehen eines im Spindelkörper (1) um eine zur Achse (5) senkrechte Drehachse (33) drehbaren Exzenters (29) erzeugbar sind, **dadurch gekennzeichnet, dass** der Exzenter (29) mit dem Steuerglied (11) über ein Hebelgetriebe gekoppelt ist, das einen auf das Steuerglied (11) einwirkenden Schwenkhebel (19) aufweist, der im Bereich eines Hebelendes (23) für seine Schwenkbewegung mit einem Betätigungsschieber (25) gelenkig verbunden ist, der im Spindelkörper (1) axial beweglich geführt ist, den Exzenter (29) mit dem demgegenüber axial versetzt angeordneten Schwenkhebel (19) verbindet und durch die Drehbewegung des Exzenters (29) axial bewegbar ist.

2. Spindelkopf nach Anspruch 1, **dadurch gekennzeichnet, dass** der Spindelkörper (1) in einem an einer Werkzeugscheibe des betreffenden Werkzeugrevolvers festlegbaren Grundkörper (3) drehbar gelagert ist und dass sich der Exzenter (29) am aus dem Grundkörper (3) vorstehenden vorderen Ende des Spindelkörpers (1) befindet.

3. Spindelkopf nach Anspruch 1 oder 2, **dadurch gekennzeichnet, dass** als Spannelemente Spannklauen (9) in zur Spindelachse (5) konzentrischer, ringförmiger Anordnung innerhalb der Werkzeugaufnahme (7) vorgesehen und an einer Steuerkurve (15) des Steuergliedes (11) derart geführt sind, dass bei dessen Axialbewegung eine Schwenkbewegung der Spannklauen (9) in die Spannstellung erfolgt.

4. Spindelkopf nach Anspruch 3, **dadurch gekennzeichnet, dass** das Steuerglied (11) in der Art eines innerhalb der Werkzeugaufnahme (7) axial verschiebbar geführten Rotationskörpers gestaltet ist, der in einem gegenüber der Steuerkurve (15) nach rückwärts versetzten Längenbereich einen Durchbruch (17) aufweist, durch den sich der Schwenkhebel (19) erstreckt.

5. Spindelkopf nach Anspruch 4, **dadurch gekennzeichnet, dass** der Schwenkhebel (19) an einem Ende außerhalb der Werkzeugaufnahme (7) mit zur Spindelachse (5) senkrecht verlaufender Schwenkachse (21) gelagert und mit seinem anderen Ende (23) mit dem Betätigungsschieber (25) gekoppelt ist.

6. Spindelkopf nach Anspruch 5, **dadurch gekennzeichnet, dass** der Betätigungsschieber (25) am Spindelkörper (1) außerhalb der Werkzeugaufnahme (7) gelagert und an seinem der Verbindungsstelle mit dem Schwenkhebel (19) entgegengesetzten vorderen Ende einen vom Exzenter (29) durchgriffenen Durchbruch (27) aufweist.

7. Spindelkopf nach Anspruch 6, **dadurch gekennzeichnet, dass** der Betätigungsschieber (25) für die Gelenkverbindung mit dem Schwenkhebel (19) einen an seinem hinteren Endbereich befindlichen Durchbruch (43) aufweist, den das betreffende Ende (23) des Schwenkhebels (19) durchgreift.

8. Spindelkopf nach Anspruch 7, **dadurch gekennzeichnet, dass** der Schwenkhebel (19) zur Bildung einer Gelenkstelle in dem den Durchbruch (43) des Betätigungsschiebers (25) durchgreifenden Abschnitt ballig (45) ausgebildet ist.

9. Spindelkopf nach einem der Ansprüche 4 bis 8, **dadurch gekennzeichnet, dass** sich der Schwenkhebel (19) in dem Durchbruch (17) des Steuergliedes durch eine durch eine Kalotte (47) gebildete Gleitführung hindurch erstreckt.

10. Spindelkopf nach einem der Ansprüche 3 bis 9, **dadurch gekennzeichnet, dass** sich die Steuerkurve (15) für die Spannklauen (9) an einem in der Werkzeugaufnahme (7) nach vorn stehenden Endes (13) des Steuergliedes (11) befindet und derart ausgebildet ist, dass eine vorn Schwenkhebel (19) bewirkte Rückziehbewegung des Steuergliedes (11) nach hinten die anlaufenden Spannklauen (9) in die Spannstellung bewegt.

11. Spindelkopf nach Anspruch 10, **dadurch gekennzeichnet, dass** eine auf das hintere Ende (49) des Steuergliedes (11) einwirkende Druckfeder (51) vorhanden ist, die das Steuerglied (11) in eine nach vorn vorgeschobene, der Lösestellung entsprechende Position vorspannt.

## Claims

1. A spindle head for machine tools, particularly for operating a tool station of a tool revolver, comprising a driveable spindle body (1) having a tool receptacle (7) for tools having a hollow shaft and a tool clamping device having clamping elements (9) that can be moved between clamping and release positions by displacement movements of a control member (11) occurring in the direction of the spindle axis (5), wherein the displacement movements may be produced by rotating an eccentric (29) in the spindle body (1) that is rotatable about a rotational axis (33) perpendicular to the axis (5), **characterised in that** the eccentric (29) is coupled with the control member (11) via a lever mechanism comprising a pivot lever (19) acting on the control member (11), said pivot lever being connected for the pivot motion thereof in a jointed fashion to an actuation slider (25) in the region of a lever end (23), the actuation slider being guided in an axially moveable fashion in the spindle body (1), connecting the eccentric (29) to the pilot lever (19) axially displaced relative thereto, and being axially moveable by the rotational movement of the eccentric (29).

2. The spindle head according to Claim 1, **characterised in that** the spindle body (1) is mounted rotatably in a base body (3) that can be fixed on a tool disc of the tool revolver in question, and that the eccentric (29) is located on the front end of the spindle body (1) projecting from the base body (3).

3. The spindle head according to Claim 1 or 2, **characterised in that** clamping claws (9) are provided as clamping elements in an annular arrangement concentric to the spindle axis (5) within the tool receptacle (7) and are guided on a control curve (15) of the control member (11) such that when the latter moves axially, a pivot motion of the clamping claws (9) into the clamping position takes place.

4. The spindle head according to Claim 3, **characterised in that** the control member (11) is configured in the manner of a rotation body guided in an axially moveable fashion within the tool receptacle (7) and which has a gap (17) in a longitudinal region displaced rearwards in relation to the control curve (15) through which the pivot lever (19) extends.

5. The spindle head according to Claim 4, **characterised in that** the pivot lever (19) is mounted at one end outside of the tool receptacle (7) with a pivot axis (21) extending perpendicularly to the spindle axis (5) and is coupled by its other end (23) to the actuation slider (25).

6. The spindle head according to Claim 5, **characterised in that** the actuation slider (25) is mounted on the spindle body (1) outside of the tool receptacle (7) and on its front end opposite the connection point with the pivot lever (19) has a gap (27) through which the eccentric (29) passes.

7. The spindle head according to Claim 6, **characterised in that** the actuation slider (25) for the jointed connection to the pivot lever (19) has a gap (43) located on its rear end region through which the respective end (23) of the pivot lever (19) passes.

8. The spindle head according to Claim 7, **characterised in that** the pivot lever (19) is spherical (45) in design in order to form a jointed point in the section passing through the gap (43) of the actuation slider (25).

9. The spindle head according to any of Claims 4 to 8, **characterised in that** the pivot lever (19) in the gap (17) of the control member extends through a sliding guide formed by a hemispherical head (47).

10. The spindle head according to any of Claims 3 to 9, **characterised in that** the control curve (15) for the clamping claws (9) is located at an end (13) of the control member (11) projecting forwards in the tool receptacle (7) and is designed such that a rearwards retracting motion of the control member (11) brought about by the pivot lever (19) moves the initiating clamping claws (9) rearwards into the clamping position.

11. The spindle head according to Claim 10, **characterised in that** there is a compression spring (51) acting on the rear end (49) of the control member (11) which pre-stresses the control member (11) into a pushed forward position corresponding to the release position.

## Revendications

1. Tête de broche pour des machines-outils, notamment pour le fonctionnement d'un poste à outil d'une tourelle à outil, comprenant un corps (1) de broche, qui peut être entraîné et qui a un logement (7) d'outil pour des outils à arbre creux et à dispositif de serrage d'outil ayant des éléments (9) de serrage, qui peuvent passer entre des positions de serrage et de desserrage par des coulissements d'un organe (11) de commande s'effectuant dans la direction de l'axe (5) de la broche, dans laquelle les coulissements peuvent être produits par rotation d'un excentrique (29) tournant autour d'un axe (33) de rotation perpendiculaire à l'axe (5), **caractérisée en ce que** l'excentrique (29) est couplé à l'organe (11) de commande par un mécanisme à levier, qui a un levier (19) pivotant agissant sur l'organe (11) de commande et articulé, dans la zone d'une extrémité (23) de levier pour son mouvement de pivotement, à un coulisseau (25) d'actionnement, qui est mobile axialement dans le corps (1) de la broche, qui relie l'excentrique (29) au levier (19) de pivotement, disposé de manière décalée axialement par rapport à lui, et qui peut être déplacé axialement par le mouvement de rotation de l'excentrique (29).

2. Tête de broche suivant la revendication 1, **caractérisée en ce que** le corps (1) de broche est monté tournant dans un corps (3) de base pouvant être fixé sur un disque à outil de la tourelle à outil concernée et **en ce que** l'excentrique (29) se trouve à l'extrémité avant du corps (1) de broche dépassant du corps (3) de base.

3. Tête de broche suivant la revendication 1 ou 2, **caractérisée en ce qu'**il est prévu, comme éléments de serrage, des griffes (9) de serrage, en un agencement annulaire concentrique à l'axe (5) de la broche à l'intérieur du logement (7) d'outil, qui sont guidées sur une came (15) de commande de l'organe (11) de commande, de manière à ce qu'il se produise un mouvement de pivotement des griffes (9) de serrage venant dans la position de serrage lors du mouvement axial de l'organe de commande.

4. Tête de broche suivant la revendication 3, **caractérisée en ce que** l'organe (11) de commande est conformé à la manière d'une pièce de révolution, pouvant coulisser axialement dans le logement (7) d'outil et ayant, dans la partie longitudinale, décalée vers l'arrière par rapport à la came (15) de commande, une traversée (17), dans laquelle s'étend le levier (19) de pivotement.

5. Tête de broche suivant la revendication 4, **caractérisée en ce que** le levier (19) de pivotement est monté à une extrémité à l'extérieur du logement (7) d'outil, en ayant un axe (21) de pivotement s'étendant perpendiculairement à l'axe (5) de la broche, et est couplé au coulisseau (25) d'actionnement par son autre extrémité (23).

6. Tête de broche suivant la revendication 5, **caractérisée en ce que** le coulisseau (25) d'actionnement est monté sur le corps (1) de broche à l'extérieur du logement (7) d'outil et a, à son extrémité avant opposée au point de liaison avec le levier (19) de pivotement, une traversée (27) dans laquelle passe l'excentrique (29).

7. Tête de broche suivant la revendication 6, **caractérisée en ce que** le coulisseau (25) d'actionnement a, pour l'articulation avec le levier (19) de pivotement, une traversée (43), qui se trouve à sa partie d'extrémité arrière et qui traverse l'extrémité (23) concernée du levier (19) de pivotement.

8. Tête de broche suivant la revendication 7, **caractérisée en ce que** le levier (19) de pivotement est, pour la formation d'un point d'articulation, constitué de manière convexe (45) dans la partie passant dans la traversée (43) du coulisseau (25) d'actionnement.

9. Tête de broche suivant l'une des revendications 4 à 8, **caractérisée en ce que** le levier (19) de pivotement s'étend dans la traversée (17) de l'organe de commande en passant dans un guidage à glissement formé par une calotte (47).

10. Tête de broche suivant l'une des revendications 3 à 9, **caractérisée en ce que** la came (15) de commande des griffes (9) de serrage se trouve sur une extrémité (13), en saillie vers l'avant du logement (7) d'outil, de l'organe (11) de commande et est telle qu'un mouvement de retrait provoqué par le levier (19) de pivotement de l'organe (11) de commande déplace vers l'arrière les griffes (9) de serrage en déplacement en les mettant dans la position de serrage.

11. Tête de broche suivant la revendication 10, **caractérisée en ce qu'**il y a un ressort (51) de compression, qui agit sur l'extrémité (49) arrière de l'organe (11) de commande et qui précontraint l'organe (11) de commande dans une position correspondant à la position de desserrage déplacée vers l'avant.
